# EUROPÄISCHE PATENTSCHRIFT

(11) **EP 1 516 408 B1**
(45) Veröffentlichungstag und Bekanntmachung des Hinweises auf die Patenterteilung: **04.04.2007**
(21) Anmeldenummer: 03706259.3
(22) Anmeldetag: 30.01.2003
(51) Int. Cl.: H02K 1/28, H02K 1/27, H02K 15/03

(54) **ELEKTRISCHE MASCHINE, INSBESONDERE BÜRSTENLOSE MASCHINE MIT PERMANENTMAGNET ERREGTEM ROTOR UND VERFAHREN ZU IHRER HERSTELLUNG**
ELECTRIC MACHINE, PARTICULARLY A BRUSHLESS MACHINE HAVING A PERMANENT MAGNET-EXCITED ROTOR AND METHOD FOR THE PRODUCTION THEREOF
MOTEUR ELECTRIQUE, NOTAMMENT MOTEUR SANS BALAIS, A ROTOR EXCITE PAR AIMANT PERMANENT ET PROCEDE PERMETTANT DE LE PRODUIRE

(30) Priorität: 05.06.2002 DE 10224867
(43) Veröffentlichungstag der Anmeldung: 23.03.2005
(73) Patentinhaber: ROBERT BOSCH GMBH, 70442 Stuttgart (DE)
(72) Erfinder: KOENIG, Tilo, 77830 Buehlertal (DE)
(86) Internationale Anmeldenummer: PCT/DE2003/000243
(87) Internationale Veröffentlichungsnummer: WO 2003/105312

(56) Entgegenhaltungen:
- EP-A- 0 872 945
- US-A- 5 734 216
- PATENT ABSTRACTS OF JAPAN vol. 2002, no. 12, 12. Dezember 2002 (2002-12-12) -& JP 2002 233088 A (MITSUBISHI ELECTRIC CORP), 16. August 2002 (2002-08-16)

## Beschreibung

Die Erfindung betrifft eine elektrische Maschine, insbesondere eine bürstenlose Maschine mit permanentmagnetisch erregtem Rotor nach der Gattung des Anspruchs 1 sowie ein Verfahren zur Herstellung der Maschine nach der Gattung des Anspruchs 12.

### Stand der Technik

Bei den elektrischen Maschinen gibt es eine größere Baugruppe von bürstenlosen Maschinen, deren Rotor eine permanentmagnetische Erregung haben. Bei derartigen Maschinen sind Permanentmagnete über den Rotorumfang in der Regel mit abwechselnder Polarität ringförmig angeordnet. Sie wirken mit einem Stator zusammen, in dessen Wicklung im Motorbetrieb in der Regel ein Drehfeld erzeugt wird, welches den Rotor mitnimmt, wobei dann der Strom in der Statorwicklung in der Regel elektronisch kommutiert wird.

In der Literatur sind Bauformen derartiger Maschinen z.B. bei "Michael Bork-Bauformen von Tranversalflussmaschinen-Diss. 82, RWTH Aachen, Shaker Verlag Aachen, 1997; Seite 6 ff" näher erläutert. Dabei werden in bekannter Weise die Permanentmagnete am Rotorumfang geklebt oder vergossen. Sie können dabei als Einzelmagnete oder als Magnetring auf einen Tragkörper des Rotors aufgesetzt und befestigt werden. Die Magnetringe bestehen dabei bevorzugt aus gesintertem bzw. gequenchtem NdFrB oder aus kunststoffgebundenem Magnetmaterial. Die Befestigung des Magnetringes am Tragkörper des Rotors durch Kleben oder Vergießen erfolgt dabei über einen Ringspalt zwischen Ringmagnet und Tragkörper. Die Klebeverbindung ist dabei um so besser, je besser Klebstoff und Klebespaltdicke aufeinander abgestimmt sind und je größer und kontinuierlicher der Füllfaktor im Klebespalt ist. Dabei wird der Klebstoff in bekannter Weise zunächst entweder am Umfang des Tragkörpers oder des Ringmagneten aufgetragen und danach wird der Magnetring von einer Stirnseite her axial auf den Tragkörper aufgeschoben. Bei der Bemessung des Klebe-Ringspaltes kommt oftmals erschwerend hinzu, dass der Tragkörper zugleich als magnetisches Rückschlussteil zwischen den Polen des Magnetringes dient, so dass aus diesem Grund der Ringspalt zur Vermeidung größerer magnetischer Verluste möglichst klein zu wählen ist. Dadurch ergibt sich als weiterer Nachteil der bekannten Lösungen, dass durch die Auftragung des Klebstoffs auf den Tragkörper der Klebstoff beim Fügen weggedrückt und ungleichmäßig verteilt wird, und dass je nach Viskosität des Klebstoffs im Ringspalt auch Lufteinschlüsse entstehen können, welche die Klebverbindung schwächen und die ggf. später bei thermischen Belastungen der Maschine bis zur Zerstörung der Klebverbindung führen können. Bei der Verwendung von Klebstoffen mit hoher Viskosität besteht ferner der Nachteil, dass der Klebstoff nach bekannter Technik nur schlecht in enge Klebespalte zu drücken ist

Aus der JP-A 2002 233 088, veröffentlicht am 16.08.2002, ist ein Rotor bekannt, bei dem die Welle einen Bereich mit größerem Durchmesser und einen Bereich mit kleinerem Durchmesser aufweist, wobei ein zylindrischer Teil auf dem Bereich mit kleinerem Durchmesser aufgebracht ist. Ein Permanentmagnet ist mittels Klebstoff auf dem Bereich mit größerem Durchmesser und dem zylindrischen Teil aufgebracht.

Die EP-A 0 872 945 offenbart einen permanenterregten Rotor mit zwei Ringmagneten, die auf den Rotorkörper aufgeklebt werden. Der Rotorkörper weist Längsrillen auf zur besseren Augnahme des Klebstoffs.

### Vorteile der Erfindung

Die erfindungsgemäße elektrische Maschine mit den Kennzeichnungsmerkmalen des Anspruchs 1 und mit den kennzeichnenden Verfahrensmerkmalen des Anspruchs 11 hat dagegen den Vorteil einer gleichmäßigen Verteilung des Klebstoffs im gesamten Ringspalt zwischen Magnetring und Tragkörper, zumal durch die erfindungsgemäße Lösung auch Klebstoff mit höherer Viskosität verarbeitet werden können. Dadurch ergibt sich als weiterer Vorteil, dass für die Verwendung des Tragkörpers als magnetischer Rückschluss ein relativ kleiner Ringspalt für die Klebeverbindung zur Vermeidung von magnetischen Verlusten realisierbar ist. Ferner ist vorteilhaft, dass sowohl die Dosierung als auch die Aufbringung und Positionierung des Klebstoffs vor dem Aufsetzen des Magnetringes auf den Tragkörper recht einfach und genau vorgenommen werden kann. Ferner ergibt sich dabei eine sehr gute Füllung des Klebstoffringspaltes und damit eine stabile Klebeverbindung und Lufteinschlüsse werden weitgehend ausgeschlossen. Außerdem ergibt sich in vorteilhafter Weise durch die am Umfang gleichmäßige Einbringung des Klebstoffs eine bessere Selbstzentrierung des Magnetringes auf dem Tragkörper als bei anderen Lösungen.

Durch die in den Unteransprüchen aufgeführten Maßnahmen ergeben sich vorteilhafter Weiterbildungen und Verbesserungen der in den Hauptansprüchen angegebenen Merkmale.

Für eine einfache und zuverlässige Anbringung und Verklebung ist es vorteilhaft, wenn die Magnetpole in den mindestens einen rohrförmigen Magnetring einmagnetisiert sind. Alternativ dazu können die Permanentmagnete aber auch als Quader- oder Schalenmagnete einzeln oder in Gruppen zu dem mindestens einen Magnetring am Umfang des Rotors auf dem Tragkörper zusammengesetzt sein. Für eine gleichmäßig gute Klebeverbindung im gesamten Umfangsbereich des Tragkörpers ist es von Vorteil, wenn die Lücke zwischen der Radialschulter des Tragkörpers und dem Ringteil, aus die der Klebstoff in den Ringspalt gedrückt wird, mitten unter der axialen Erstreckung des Magnetringes liegt. In einfachster Weise wird dabei die Radialschulter des Tragkörpers von einem Bund des Grundkörpers gebildet, der sich von der Mitte bis mindestens zu der einen Stirnseite des Magnetringes erstreckt.

Da die erfindungsgemäße Lösung auch für Rotoren mit mehreren, axial hintereinander angeordneten Magnetringen sowie für einen entsprechend breiten Magnetring mit mehreren axial hintereinanderliegenden Polen realisierbar ist, ist es insbesondere für derartige Anordnungen von Vorteil, wenn unterhalb der Magnetringe mindestens zwei Radialschultern in axialem Abstand am Tragkörper angeordnet sind, bis zu denen jeweils ein rohrförmiges Ringteil beidseitig auf den Grundkörper axial aufgeschoben wird. In einfachster Weise sind dabei die zwei Radialschultern von einem Bund des Grundkörpers gebildet, welcher mitten unter der axialen Erstreckung von einem oder mehreren Magnetringen liegt. Alternativ dazu können aufgrund einer vereinfachten Herstellung die zwei Radialschultern in vorteilhafter Weise auch von einem weiteren Ringteil des Tragkörpers gebildet sein, welches bis mitten unter die axiale Erstreckung der Magnetringe auf den Grundkörper aufzuschieben ist. Als weitere Alternativen können auch vier oder mehr rohrförmige Ringteile des Tragkörpers auf den Grundkörper axial aufgeschoben werden, deren einander gegenüberliegende Stirnseiten drei oder mehr Lücken für die Aufnahme des Klebstoffs bilden, welche unterhalb der Magnetringe gleichmäßig axial verteilt angeordnet sind. Derartige Lösungen sind vor allem dann vorteilhaft, wenn die axiale Erstreckung der Magnetringe in Bezug auf die Ringspaltdicke groß ist.

Da die Verbindung der Ringteile mit dem Grundkörper in der Regel Drehmomente aufnehmen muss, die von den magnetischen Kräften am Rotorumfang über die Klebeverbindung auf die Ringteile überragen werden, sind zweckmäßigerweise die Ringteile des Tragkörpers auf dem Grundkörper verdrehsicher aufgeschoben. Eine solche verdrehsichere Verbindung wird in einfacher Weise dadurch hergestellt, dass der Grundkörper auf seinem das Ringteil bzw. die Ringteile tragenden Umfangsbereich mit einer Rändelung bzw. Längskerbung versehen ist Bei einer besonders großen Beanspruchung kann hier auch eine Keilverzahnung oder eine Passfederverbindung vorgesehen werden. Ist dagegen für die Drehmomentübertragung die Klebefläche auf dem Ringteil nicht erforderlich, so kann das Ringteil auch mit einer Spielpassung auf den Grundkörper aufgeschoben werden.

Bei dem erfindungsgeniäßen Verfahren nach Anspruch 11 wird die benötigte Klebstoffmenge zunächst am Tragkörper so aufgebracht, dass er beim anschließenden Aufsetzen des mindestens einen Magnetringes unterhalb dieses Magnetringes positioniert ist, ohne den dadurch entstehenden Ringspalt zu berühren. Erst durch das axiale Aufpressen des mindestens einen Ringteils auf den Grundkörper des Tragkörpers wird der Klebstoff radial nach außen sowie ringsum gleichmäßig axial nach beiden Seiten in den Ringspalt gedrückt, um dort aushärten zu können. Dabei ergeben sich zwei alternative Verfahrensvarianten.

Gemäß einer ersten Variante wird zunächst das mindestens eine Ringteil des Tragkörpers soweit von einer Stirnseite auf den Grundkörper axial aufgeschoben, bis zwischen ihm und der Radialschulter des Tragkörpers eine zur Aufnahme des benötigten Klebstoffs ausreichend breite axiale Lücke verbleibt. Danach wird der benötigte Klebstoff in Form einer Raupe in die Lücke eingefüllt. So dann wird der rohrförmige Magnetring auf den Umfang des Tragkörpers aufgesetzt, so dass zwischen ihm und dem Tragkörper ein Ringspalt entsteht und schließlich wird das mindestens eine Ringteil soweit axial gegen die Radialschulter des Tragkörpers gepresst, dass dabei die Lücke geschlossen und der Klebstoff aus der Lücke heraus in den Ringspalt gedrückt wird. Dabei ist es besonders vorteilhaft, wenn die Magnetpole in den mindestens einen rohrförmigen Magnetring einmagnetisiert werden, nachdem dieser von einer Stirnseite her auf den Umfang des Tragkörpers unter Bildung des Ringspaltes axial aufgeschoben wurde. Diese erste Variante ist auch von Vorteil, wenn mehrere Ringteile des Tragkörpers auf den Grundkörper axial derart aufgeschoben werden, dass zwischen ihnen und/oder einem Bund des Grundkörpers jeweils eine Lücke zur Aufnahme des benötigten Klebstoffs verbleibt. Auch dort werden nach dem Einfüllen des Klebstoffs in die Lücken und nach dem axialen Aufschieben des Magnetringes auf den Tragkörper durch ein axiales Zusammendrücken der Ringteile alle Lücken gleichzeitig und gleichmäßig geschlossen und dadurch der Klebstoff in den Ringspalt gedrückt.

Gemäß einer zweiten Variante des Herstellverfahrens wird der benötigte Klebstoff dagegen bereits im ersten Verfahrensschritt vor der Radialschulter auf den Grundkörper des Tragkörpers aufgetragen. Nach dem anschließenden Aufsetzen des Magnetringes auf den Umfang des Tragkörpers wird nun das eine Ringteil bzw. es werden zwei Ringteile in einem Arbeitsgang von der einen Stirnseite bzw. von beiden Stirnseiten bis zu der Schulter des Tragkörpers axial auf den Grundkörper aufgepresst, wobei jeweils der Klebstoff aus der zunehmend kleiner werdenden Lücke zwischen Radialschulter und Ringteil heraus ringsum in den verbleibenden Ringspalt gedrückt wird.

Prinzipiell lässt sich die erfindungsgemäße Lösung für alle Klebeverbindungen verwenden, bei denen ein rohrförmiges oder ebenes Teil auf einem runden oder ebenen Tragkörper unter Bildung eines Klebespaltes flächiger verklebt werden soll. Die Dicke des Klebespaltes kann dabei in Abstimmung mit dem verwendeten Klebstoff so bemessen werden, dass eine optimal zuverlässige Klebeverbindung entsteht.

### Zeichnung

Die Erfindung wird im folgenden beispielhaft anhand der Figuren näher erläutert. Es zeigen:
Figur 1 eine erfindungsgemäße bürstenlose elektrische Maschine als erstes Ausführungsbeispiel
   a) im Längsschnitt und
   b) im Querschnitt, jeweils die obere Hälfte,
Figur 2 zeigt in einer ersten Variante die Herstellung des Rotors der elektrischen Maschine nach Figur 1 in den Verfahrensschritten a) bis e);
Figur 3 zeigt einen Längsschnitt durch einen Rotor der Maschine als zweites Ausführungsbeispiel,
Figur 4 einen Rotor im Längsschnitt als drittes Ausführungsbeispiel,
Figur 5 einen Rotor im Längsschnitt als viertes Ausführungsbeispiel und
Figur 6 zeigt eine zweite Variante des Herstellverfahrens mit den Verfahrensschritten a) und b).

### Beschreibung der Ausführungsbeispiele

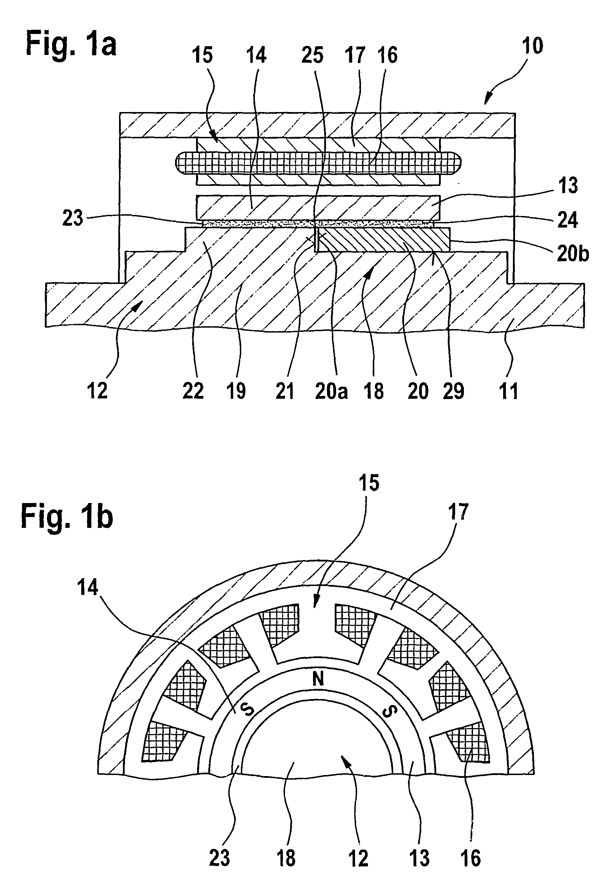

Figur 1a zeigt in einem ersten Ausführungsbeispiel eine erfindungsgemäße elektrische Maschine in Form eines EC-Motors 10 im Längsschnitt und Figur 1b im Querschnitt jeweils bis zur Mittelachse. Sie hat einen mit einer Welle 11 versehenen Rotor 12, der über seinem Umfang einen rohrförmigen Magnetring 13 trägt, in dem durch radiale Magnetisierung Magnetpole 14 mit abwechselnder Polarität ringförmig angeordnet sind. Die Magnetpole 14 wirken mit einem Stator 15 zusammen, der den Rotor 12 konzentrisch umgibt. Der Stator 15 ist mit einer Wicklung 16 ausgerüstet, in dem beispielsweise durch eine elektronische Kommutierung ein getakteter Gleichstrom mit wechselnder Stromrichtung eingeprägt wird. Die Wicklung 16 ist von Magnetjoch 17 eingefasst. Durch die gesteuerte Taktung des Stromes in der Wicklung 16 wird ein Drehfeld erzeugt, durch das der Rotor 12 in die eine oder andere Drehrichtung mitgenommen wird. Eine solche elektrische Maschine ist beispielsweise in Kraftfahrzeugen für hochdynamische Antriebe mit hohem Drehzahlspektrum, kurzer Anlaufzeit, geringer Momentenwelligkeit, hoher Lebensdauer und geringer Baugröße einsetzbar. Die Haupteinsatzgebiete liegen in den Stell-, Lüfter- und Pumpenanwendungen.

Der Magnetring 13 des Rotors 12 ist auf einem mehrteiligen Tragkörper 18 befestigt, der als magnetischer Rückschluss für die Magnetpole 14 aus weichmagnetischem Material ausgebildet ist. Der Tragkörper 18 besteht aus einem zylindrischen Grundkörper 19 und einem rohrförmigen Ringteil 20, das auf einen unterhalb des Magnetrings 13 liegenden Umfangsbereich 29 des Grundkörpers 19 axial aufgeschoben ist. Dicht vor der inneren Stirnseite 20a dieses Ringteiles 20 befindet sich eine ringförmige Radialschulter 21, welche die eine Stirnseite eines Bundes 22 am Grundkörper 19 bildet. Zwischen dem Innenumfang des Magnetrings 13 und dem Außenumfang des Tragkörpers 18, welcher durch den Bund 22 und das Ringteil 20 gebildet wird, liegt ein Ringspalt 23, der mit einem Klebstoff 24 gefüllt ist. Wie weiter unten näher erläutert, wurde der Klebstoff 24 zunächst in eine Lücke 25 zwischen Radialschulter 21 und der Stirnseite 20a des Ringteils 20 eingebracht und von dort mit dem Schließen der Lücke 25 gleichmäßig radial nach außen in den Ringspalt 23 gepresst. Die geschlossene Lücke 25 befindet sich dabei mitten unter der axialen Erstreckung des Magnetrings 23. Da die axiale Breite des Bundes 22 sich von der Radialschulter 21 bis etwas über die linke Stirnseite des Magnetrings 13 hinaus erstreckt, und da sich ferner das mit dem Bund 22 zusammenwirkende Ringteil 20 von der Mitte bis etwas über die rechte Stirnseite des Magnetringes 13 hinaus erstreckt, ergibt sich über die gesamte axiale Breite des Magnetringes 13 eine gleichmäßige belastbare Klebeverbindung des Magnetringes 13 mit dem Tragkörper 18. Je nach Größe der auf die Welle 11 des Rotors 12 zu übertragenden Drehmomente der elektrischen Maschine 10 muss das Ringteil 20 mehr oder weniger verdrehfest auf dem vor der Radialschulter 21 liegenden Umfangsbereich 29 des Grundkörpers 19 aufgeschoben werden. Im einfachsten Fall wird dies gemäß Figur 1 durch eine Presspassung erreicht. Für eine höhere Verdrehfestigkeit kann das Ringteil 20 aber ebenso auch über eine Rändelung oder Längskerbung am Umfangsbereich 29 des Grundkörpers 19 erzielt werden oder das Ringteil 20 wird über eine Kerbverzahnung oder Passfederverbindung auf den Grundkörper 19 axial aufgesetzt.

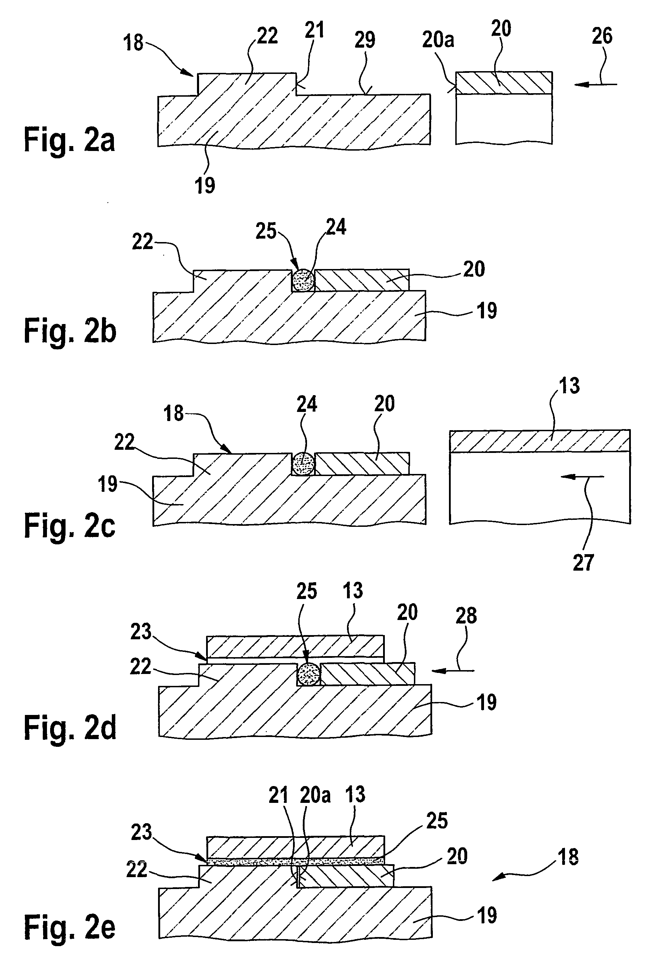

Figur 2 zeigt ein Verfahren zur Herstellung der Klebeverbindung zwischen Ringmagnet 13 und Tragkörper 18 in einer ersten Variante mit den fünf Fertigungsschritten a) bis e). Dabei wird in einem ersten Schritt das Ringteil 20 des Tragkörpers 18 soweit von einer Stirnseite auf den Grundkörper 19 in Richtung des Pfeiles 26 nach Figur 2 a) axial aufgeschoben, bis zwischen ihm und der Radialschulter 21 am Grundkörper 19 eine Lücke 25 verbleibt, deren Tiefe und axiale Breite zur Aufnahme der für die Klebeverbindung benötigten Klebstoffmenge ausreichend bemessen ist. In einem zweiten Verfahrenschritt gemäß Figur 2 b) wird nun in die so gebildete Lücke 25 der benötigte Klebstoff 24 ringsum in Form einer Raupe eingefüllt. So dann wird in einem dritten Verfahrenschritt nach Figur 2 c) der rohrförmige Ringmagnet 13 auf den von dem Bund 22 und dem Ringteil 20 gebildeten Umfang des Tragkörpers 18 von einer Stirnseite her in Richtung des Pfeiles 27 axial aufgeschoben. Dabei ist der Innendurchmesser des Magnetringes 13 derart bemessen, dass zwischen ihm und dem Umfang des Tragkörpers 18 ein Ringspalt 23 gemäß Figur 2 d) gebildet wird. In einem vierten Verfahrenschritt wird nun gemäß Figur 2 d) das Ringteil 20 in Richtung des Pfeiles 28 gegen die Radialschulter 21 des Grundkörpers 19 gedrückt. Dabei wird die Lücke 25 zwischen dem Ringteil 20 und dem Bund 22 zunehmend schmaler, so dass der dort befindliche Klebstoff 24 radial nach außen in den Ringspalt 23 gepresst wird. Dort fließt er gleichmäßig in beide Axialrichtungen. Durch die axiale Andrückkraft wird schließlich gemäß Figur 2 e) die Lücke 25 geschlossen und der Klebstoff 24 wird dabei bis zu den Stirnseiten des Magnetringes 13 in den Ringspalt 23 gepresst. Da der Klebstoff 24 ringsum mit gleichmäßigem Druck in den Ringspalt 23 fließt, wird dabei gleichzeitig der Magnetring 13 auf dem Tragkörper 18 zentriert. Nach der Aushärtung des Klebstoffes wird der Rotor aufmagnetisiert, wobei sich die Magnetpole innerhalb des Ringmagneten ausbilden.

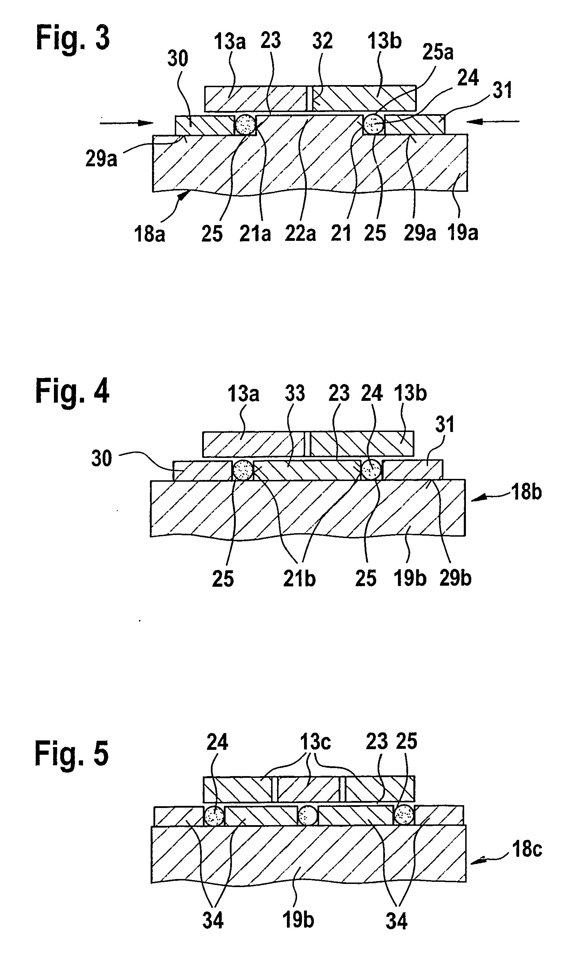

Figur 3 zeigt in einem zweiten Ausführungsbeispiel die Anbringung zweier die Magnetpole enthaltende, axial nebeneinander angeordneter Ringmagnete 13a, 13b auf einem Tragkörper 18a. Hier liegen unterhalb der Magnetringe 13a, 13b zwei Radialschultern 21, 21a des Tragkörpers 18a mit axialem Abstand voneinander. Die beiden Schultern 21, 21a werden hier von einem Bund 22a des Grundkörpers 19a gebildet, welcher mitten unter der axialen Erstreckung der Magnetringe 13a, 13b liegt. Hier wird von beiden Stirnseiten des Grundkörpers 19a her jeweils in Pfeilrichtung ein rohrförmiges Ringteil 30, 31 auf den jeweiligen Umfangsabschnitt 29a des Grundkörpers 19a axial aufgeschoben und der zuvor in die so gebildeten Lücken 25 eingebrachte Klebstoff 24 wird dabei ringsum aus den zwei Lücken 25 in den Ringspalt 23 gepresst. Um Lufteinschlüsse zwischen den Lücken 25 im Ringspalt 23 zu vermeiden, ist zwischen den beiden Magnetringen 13a, 13b ein Fuge 32 angeordnet, durch die Luft aus dem Ringspalt 23 nach außen entweichen kann.

Figur 4 zeigt in einem weiteren Ausführungsbeispiel ein drittes Ringteil 33 anstelle des Bundes 22a aus Figur 3 zur Bildung der beiden Radialschultern 21b. Die drei Ringteile 30, 31 und 33 werden zunächst zur Bildung der Lücken 25 mit axialem Abstand nacheinander auf den Grundkörper 19b aufgeschoben. Danach wird der benötigte Klebstoff 24 in die Lücken 25 eingefüllt und die Magnetringe 13a und 13b unter Bildung des Ringspaltes 23 auf diese Anordnung axial aufgeschoben. Schließlich werden die beiden außenliegenden Ringteile 30, 31 axial gegen das mittlere Ringteil 33 gedrückt, wobei die beiden Lücken 25 geschlossen werden und der dort befindliche Klebstoff 24 ringsum nach außen in den Ringspalt 23 gelangt.

In einem weiteren Ausführungsbeispiel nach Figur 5 sind vier rohrförmige Ringteile 34 auf den Grundkörper 19b des Tragkörpers axial aufgeschoben, deren einander gegenüberliegende Stirnseiten drei Lücken 25 bilden, die unterhalb des Magnetrings 13 gleichmäßig axial verteilt angeordnet sind. Auch hier werden durch axiales Zusammendrücken der Ringteile 34 die Lücken 25 geschlossen und der dort zuvor eingebrachte Klebstoff 24 wird dabei in den Ringspalt 23 zwischen drei Magnetringen 13c und Ringteile 34 gepresst.

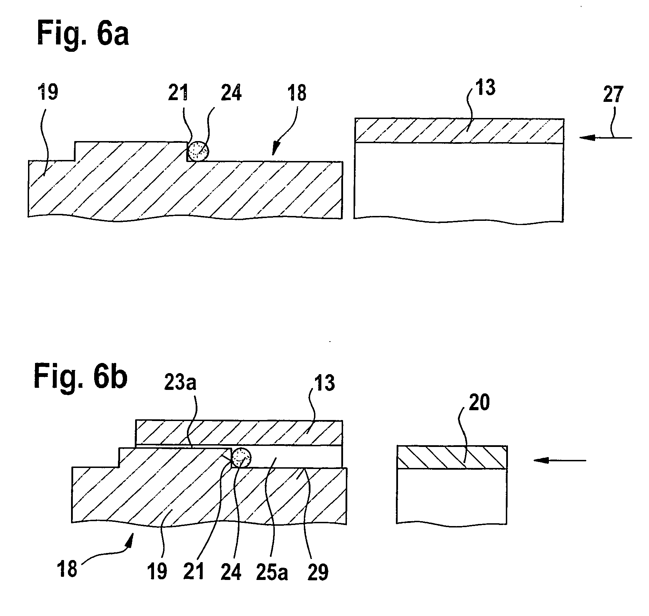

Figur 6 zeigt gegenüber Figur 2 eine zweite Variante zur Herstellung der Klebeverbindung zwischen Magnetring 13 und Tragkörper 18. Dabei wird in einem ersten Verfahrenschritt gemäß Figur 6 a) die benötigte Menge des Klebstoffs 24 vor der Radialschulter 21 auf den Grundkörper 19 des Tragkörpers aufgetragen. Danach wird in einem weiteren Schritt der Magnetring 13 derart auf den Umfang des Grundkörpers 19 in Richtung des Pfeiles 27 axial aufgeschoben, dass zwischen ihm und dem Grundkörper 19 gemäß Figur 6b) ein gestufter Ringspalt 23 a entsteht. In einem letzten Schritt wird nun das Ringteil 20 in einem einzigen Arbeitsgang von der Stirnseite bis zur Schulter 21 des Grundkörpers 19 auf dessen Umfangsabschnitt 29 bis zu der Radialschulter 21 des Grundkörpers 19 axial aufgepresst, wobei der Klebstoff 24 aus der zwischen Radialschulter 21 und Ringteil 20 gebildeten zunehmend kleiner werdenden Lücke 25a heraus ringsum in den dann verbleibenden Ringspalt 23 gemäß Figur 2d) gedrückt wird. Auch bei dieser Variante entsteht zwischen Magnetring 13 und Tragkörper 18 eine Klebeverbindung gemäß Figur 2e).

Je nach Anwendungsfall, Baugröße und Leistung der erfindungsgemäßen elektrischen Maschine sind die konstruktiven und verfahrenstechnischen Vorgaben bezüglich der Größe des Ringspaltes 23 zwischen Magnetring 13 und Tragkörper 18, bezüglich der Größe der Lücken 25 zur Aufnahme der benötigten Klebstoffmenge sowie bezüglich der Auswahl und Verarbeitungstemperatur des Klebstoffs und seiner Viskosität beim Einbringen in die Lücken 25 und in den Ringspalt 23 durch Tastversuche zu optimieren. Im Beispielsfall wäre die Realisierung von Klebespalten zwischen 0,05 und 0,25mm Dicke sowohl mit hoch- als auch mit niederviskosen Klebstoff möglich, wobei der Klebstoff 24 bei Raumtemperatur verarbeitet werden kann. Dem zufolge ist es nunmehr aufgrund der erfindungsgemäßen Lösung möglich, für die Klebeverbindung einen Klebstoff mit relativ hoher Viskosität zu verwenden und damit zu sehr kleinen Klebe-Ringspalten zu kommen, durch welche die magnetischen Verluste des Rotors nahezu eliminiert werden. Über die Größe des Klebe-Ringspaltes 23 kann ferner Einfluss auf die bevorzugte Fließrichtung, Fließgeschwindigkeit sowie auf die Klebstoffparameter genommen werden.
Um die Reaktionsfreude des Klebstoffs zu steigern, kann es ggf. notwendig sein, einen oder beide Klebepartner und/oder den Klebstoff zum Beispiel bis etwa 80°C zu erwärmen. Je nach Art des Klebstoffs kann auch zur sicheren Aushärtung eine Erwärmung erforderlich sein, z.B. bis 20 min. bei 120°C.

## Patentansprüche

1. Elektrische Maschine, insbesondere bürstenlose Maschine, mit einem umlaufenden, permanentmagnetisch erregten Rotor (12), der über seinem Umfang mindestens einen rohrförmigen Magnetring (13) aufweist, dessen Magnetpole (14) mit einer Wicklung (16) eines den Rotor umgebenden Stators (15) zusammenwirken und der auf einem zylindrischen Tragkörper (18) befestigt ist, welcher insbesondere einen magnetischen Rückschluss der Magnetpole bildet, wobei der Tragkörper (18) mehrteilig aus einem zylindrischen Grundkörper (19) und mindestens einem rohrförmigen Ringteil (20) ausgebildet ist, welches auf einen unterhalb des mindestens einen Magnetringes (13) liegenden Umfangsbereich (29) des Grundkörpers (19) bis dicht vor einer Radialschulter (21) des Tragkörpers (18) axial aufgeschoben ist, und dass ein zwischen dem mindestens einen Magnetring (13) und dem mehrteiligen Tragkörper (18) liegender Ringspalt (23) mit einem in einer axialen Lücke (25) zwischen der Radialschulter (21) und dem mindestens einen Ringteil (20) eingebrachten Klebstoff (24) durch axiales Schließen der Lücke (25) gefüllt ist, **dadurch gekennzeichnet, dass** unterhalb des mindestens einen Magnetringes (13a, 13b) mindestens zwei Radialschultern (21, 21a) in axialem Abstand voneinander am Tragkörper (18a) angeordnet sind, bis zu denen jeweils ein rohrförmiges Ringteil 30, 31 beidseitig auf den Grundkörper (19a) axial aufgeschoben ist.

2. Elektrische Maschine nach Anspruch 1, **dadurch gekennzeichnet, dass** die Magnetpole (14) in den mindestens einen rohrförmigen Magnetring (13) einmagnetisiert sind.

3. Elektrische Maschine nach Anspruch 1 oder 2, **dadurch gekennzeichnet, dass** die Lücke (25) zwischen der Radialschulter (21) und dem Ringteil (20) mitten unter der axialen Erstreckung des Magnetringes (13) liegt.

4. Elektrische Maschine nach Anspruch 3, **dadurch gekennzeichnet, dass** die Radialschulter (21) des Tragkörpers (18) von einem Bund (22) des Grundkörpers (19) gebildet ist, der sich von der Mitte bis mindestens zu der einen Stirnseite des Magnetringes (13) erstreckt.

5. Elektrische Maschine nach Anspruch 4, **dadurch gekennzeichnet, dass** das mit dem Bund (22) zusammenwirkende Ringteil (20) sich von der Mitte bis mindestens zur anderen Stirnseite des Magnetringes (13) erstreckt.

6. Elektrische Maschine nach Anspruch 1, **dadurch gekennzeichnet, dass** die zwei Radialschultern (21, 21a) von einem Bund (22a) des Grundkörpers (19a) gebildet sind, welcher mitten unter der axialen Erstreckung des Magnetringes (13) liegt.

7. Elektrische Maschine nach Anspruch 1, **dadurch gekennzeichnet, dass** die zwei Radialschultern (21, 21a) von einem weiteren Ringteil (33) des Tragkörpers (18b) gebildet sind, welches bis mitten unter die axiale Erstreckung des Magnetringes (13) auf den Grundkörper (19b) aufgeschoben ist.

8. Elektrische Maschine nach Anspruch 1 oder 2, **dadurch gekennzeichnet, dass** vier oder mehr rohrförmige Ringteile (34) auf den Grundkörper (19b) des Tragkörpers (18c) axial aufgeschoben sind, deren einander gegenüberliegende Stirnseiten drei oder mehr Lücken (25) zur Klebstnffaufnahme bilden, die unterhalb des mindestens einen Magnetringes (13) gleichmäßig axial verteilt angeordnet sind.

9. Elektrische Maschine nach einem der vorherigen Ansprüche, **dadurch gekennzeichnet, dass** das Ringteil (20) bzw. die Ringteile (30, 31, 33, 34) auf dem Grundkörper (19, 19a, 19b) verdrehsicher aufgeschoben sind.

10. Elektrische Maschine nach Anspruch 9, **dadurch gekennzeichnet, dass** der Grundkörper (19, 19a, 19b) auf seinem das Ringteil (20) bzw. die Ringteile (30, 31, 33, 34) tragenden Umfangsbereich (29, 29a, 29b) mit einer Rändelung bzw. Längskerbung versehen ist.

11. Verfahren zur Herstellung einer elektrischen Maschine, insbesondere einer bürstenlosen Maschine, nach Anspruch 1, **dadurch gekennzeichnet, dass** der benötigte Klebstoff (24) vor der Radialschulter (21) auf den Grundkörper (19) des Tragkörpers (18) aufgetragen wird,
dass so dann der mindestens eine rohrförmige Magnetring (13) auf den Umfang des Tragkörpers (18) aufgesetzt wird derart, dass zwischen ihm und dem Tragkörper (18) ein Ringspalt (23) entsteht und
dass danach das mindestens eine rohrförmige Ringteil (20) auf den Grundkörper (19) soweit axial gegen die Radialschulter (21) des Tragkörpers (18) gepresst wird, dass der Klebstoff (24) aus der zwischen Radialschulter (21) und Ringteil (20) gebildeten axialen Lücke (25) heraus in den Ringspalt (23) gedrückt wird und dort aushärtet.

12. Verfahren nach Anspruch 11, **dadurch gekennzeichnet, dass** zunächst das mindestens eine Ringteil 20 des Tragkörpers (18) soweit von einer Stirnseite auf den Grundkörper (19) axial aufgeschoben wird, bis zwischen ihm und der Radialschulter (21) des Tragkörpers (18) eine zur Aufnahme des benötigten Klebstoffs ausreichend breite axiale Lücke (25) verbleibt,
das danach der benötigte Klebstoff (24) in Form einer Raupe in die Lücke (25) eingefüllt wird,
dass so dann der mindestens eine rohrförmige Magnetring (13) auf den Umfang des Tragkörpers (18) so aufgesetzt wird, dass zwischen ihm und dem Tragkörper (18) ein Ringspalt (23) entsteht und
dass schließlich das mindestens eine Ringteil (20) soweit axial gegen die Radialschulter (21) des Tragkörpers (18) gepresst wird, dass die Lücke (25) geschlossen und der Klebstoff (24) aus der Lücke (25) heraus in den Ringspalt (23) gedrückt wird.

13. Verfahren nach Anspruch 11 oder 12, **dadurch gekennzeichnet, dass** die Magnetpole (14) in den mindestens einem rohrförmigen Magnetring (13) einmagnetisiert werden, nachdem dieser unter Bildung des Ringspaltes (23) von einer Stirnseite her auf den Umfang des Tragkörpers (18) aufgeschoben wurde.

14. Verfahren nach Anspruch 13, **dadurch gekennzeichnet, dass** mehrere Ringteile (30, 31, 33, 34) des Tragkörpers (18a, 18b, 18c) auf den Grundkörper (19a, 19b) axial derart aufgeschoben werden, dass zwischen ihnen und/oder einem Bund (22a) des Grundkörpers (19a) jeweils eine Lücke (25) zur Aufnahme des benötigten Klebstoffs (24) verbleibt, und dass nach dem Einfüllen des Klebstoffs (24) in die Lücken (25) und nach dem axialen Aufschieben des Magnetringes (13) auf den Tragkörper (18b, 18c) durch axiales Zusammendrücken der Ringteile (30, 31, 33, 34) alle Lücken (25) gleichseitig und gleichmäßig geschlossen werden und **dadurch** der Klebstoff (24) in den Ringspalt (23) gedrückt wird.

15. Verfahren nach Anspruch 11, **dadurch gekennzeichnet, dass** das mindestens eine Ringteil (20) nach dem Aufsetzen des Magnetringes (13) auf den Tragkörper (18) in einem Arbeitsgang von der Stirnseite bis zu der Radialschulter (21) des Tragkörpers (18) axial auf den Grundkörper (19) aufgepresst wird, wobei der Klebstoff aus der zunehmend kleiner werdenden Lücke (25 a) zwischen Radialschulter (21) und Ringteil (20) heraus ringsum in den verbleibenden Ringspalt (23) gedrückt wird.

16. Verfahren nach Anspruch 11, **dadurch gekennzeichnet, dass** zunächst das mindestens eine rohrförmige Ringteil (20) auf den Grundkörper (19) soweit axial gegen die Radialschulter (21) aufgeschoben wird, bis zwischen dem Ringteil (20) und der Radialschulter (21) eine zur Aufnahme des benötigten Klebstoffs (24) ausreichend breite axiale Lücke (25) verbleibt.

## Claims

1. Electric machine, particularly a brushless machine, having a peripheral, permanent magnet-excited rotor (12), which has at least one tubular magnet ring (13) over its circumference whose magnet poles (14) interact with a winding (16) of a stator (15) surrounding the rotor and which is fixed on a cylindrical supporting body (18), which in particular forms a magnetic return path of the magnet poles, the supporting body (18) having a multi-part design comprising a cylindrical basic body (19) and at least one tubular ring part (20), which is pushed axially onto a circumferential region (29), which lies beneath the at least one magnet ring (13), of the basic body (19) until it is tightly in front of a radial shoulder (21) of the supporting body (18), and an annular gap (23), which lies between the at least one magnet ring (13) and the multi-part supporting body (18), being filled with an adhesive (24), which is introduced in an axial interstice (25) between the radial shoulder (21) and the at least one ring part (20), by the interstice (25) being closed axially, **characterized in that** at least two radial shoulders (21, 21a) are arranged at an axial distance from one another on the supporting body (18a) beneath the at least one magnet ring (13a, 13b), up to which radial shoulders in each case one tubular ring part (30, 31) is pushed axially onto the basic body (19a) on both sides.

2. Electric machine according to Claim 1, **characterized in that** the magnet poles (14) are magnetized into the at least one tubular magnet ring (13).

3. Electric machine according to Claim 1 or 2, **characterized in that** the interstice (25) is positioned between the radial shoulder (21) and the ring part (20) in the centre under the axial extent of the magnet ring (13).

4. Electric machine according to Claim 3, **characterized in that** the radial shoulder (21) of the supporting body (18) is formed by a collar (22) of the basic body (19), which extends from the centre at least up to one front side of the magnet ring (13).

5. Electric machine according to Claim 4, **characterized in that** the ring part (20), which interacts with the collar (22), extends from the centre at least up to the other front side of the magnet ring (13).

6. Electric machine according to Claim 1, **characterized in that** the two radial shoulders (21, 21a) are formed by a collar (22a) of the basic body (19a), which is positioned in the centre under the axial extent of the magnet ring (13).

7. Electric machine according to Claim 1, **characterized in that** the two radial shoulders (21, 21a) are formed by a further ring part (33) of the supporting body (18b), which is pushed onto the basic body (19b) until it is in the centre under the axial extent of the magnet ring (13).

8. Electric machine according to Claim 1 or 2, **characterized in that** four or more tubular ring parts (34) are pushed axially onto the basic body (19b) of the supporting body (18c), the mutually opposing front sides of said ring parts forming three or more interstices (25) for accommodating the adhesive, which are arranged such that they are distributed axially and evenly beneath the at least one magnet ring (13).

9. Electric machine according to one of the preceding claims, **characterized in that** the ring part (20) or the ring parts (30, 31, 33, 34) are pushed onto the basic body (19, 19a, 19b) such that they are secured against rotation.

10. Electric machine according to Claim 9, **characterized in that** the basic body (19, 19a, 19b) is provided with knurling or longitudinal notching in its circumferential region (29, 29a, 29b), which bears the ring part (20) or the ring parts (30, 31, 33, 34).

11. Method for producing an electric machine, in particular a brushless machine, according to Claim 1, **characterized in that** the required adhesive (24) is applied in front of the radial shoulder (21) to the basic body (19) of the supporting body (18), **in that** the at least one tubular magnet ring (13) is then positioned on the circumference of the supporting body (18) such that an annular gap (23) is produced between it and the supporting body (18), and **in that**, subsequently, the at least one tubular ring part (20) is pressed onto the basic body (19) axially against the radial shoulder (21) of the supporting body (18) to such an extent that the adhesive (24) is forced out of the axial interstice (25) formed between the radial shoulder (21) and the ring part (20) into the annular gap (23) and is cured there.

12. Method according to Claim 11, **characterized in that**, initially, the at least one ring part (20) of the supporting body (18) is pushed axially onto the basic body (19) from a front side until an axial interstice (25) remains between it and the radial shoulder (21) of the supporting body (18) which is wide enough to accommodate the required adhesive, **in that**, subsequently, the required adhesive (24) is introduced into the interstice (25) in the form of a bead, **in that** the at least one tubular magnet ring (13) is then positioned on the circumference of the supporting body (18) such that an annular gap (23) is produced between it and the supporting body (18), and **in that**, finally, the at least one ring part (20) is pressed axially against the radial shoulder (21) of the supporting body (18) to such an extent that the interstice (25) is closed and the adhesive (24) is forced out of the interstice (25) into the annular gap (23).

13. Method according to Claim 11 or 12, **characterized in that** the magnet poles (14) are magnetized into the at least one tubular magnet ring (13) once said magnet ring has been pushed onto the circumference of the supporting body (18) from a front side so as to form the annular gap (23).

14. Method according to Claim 13, **characterized in that** a plurality of ring parts (30, 31, 33, 34) of the supporting body (18a, 18b, 18c) are pushed axially onto the basic body (19a, 19b) such that in each case an interstice (25) for accommodating the required adhesive (24) remains between them and/or a collar (22a) of the basic body (19a), and **in that**, once the adhesive (24) has been introduced into the interstices (25) and once the magnet ring (13) has been pushed axially onto the supporting body (18b, 18c), all the interstices (25) are closed simultaneously and uniformly by the ring parts (30, 31, 33, 34) being pushed together axially and, as a result, the adhesive (24) is forced into the annular gap (23).

15. Method according to Claim 11, **characterized in that** the at least one ring part (20) is pressed axially onto the basic body (19) once the magnet ring (13) has been positioned on the supporting body (18) in one working step from the front side up to the radial shoulder (21) of the supporting body (18), the adhesive being forced out of the interstice (25a), which is becoming increasingly smaller, between the radial shoulder (21) and the ring part (20) around the ring into the remaining annular gap (23).

16. Method according to Claim 11, **characterized in that**, initially, the at least one tubular ring part (20) is pushed onto the basic body (19) axially against the radial shoulder (21) until an axial interstice (25) remains between the ring part (20) and the radial shoulder (21) which is wide enough to accommodate the required adhesive (24).

## Revendications

1. Moteur électrique, notamment moteur sans balais, à rotor (12) périphérique excité par aimant permanent, qui comporte sur sa périphérie au moins un anneau magnétique (13) tubulaire dont les pôles magnétiques (14) coopèrent avec un enroulement (16) d'un stator (15) entourant le rotor et fixé sur un corps de support (18) cylindrique, qui forme en particulier une fermeture des pôles magnétiques, le corps de support (18) étant constitué en plusieurs pièces d'un corps de base (19) cylindrique et d'au moins une partie annulaire tubulaire (20) qui coulisse axialement sur une zone périphérique (29) du corps de base (19), située en dessous d'au moins un anneau magnétique (13), jusqu'à se trouver juste devant un épaulement radial (21) du corps de support (18), alors qu'un espace annulaire (23) situé entre au moins un anneau magnétique (13) et le corps de support en plusieurs parties (18), est rempli par fermeture axiale d'un intervalle (25), avec une colle (24) introduite dans l'intervalle (25) entre l'épaulement radial (21) et au moins une partie annulaire (20),
**caractérisé en ce qu'**
au moins deux épaulements radiaux (21, 21a) écartés axialement l'un de l'autre sont disposés sur le corps de support (18a) en dessous d'au moins un anneau magnétique (13a, 13b), et une partie annulaire tubulaire 30, 31, est poussée axialement sur le corps de base (19a) respectivement de chaque côté jusqu'à chacun des épaulement.

2. Moteur électrique selon la revendication 1,
**caractérisé en ce que**
les pôles magnétiques (14) sont magnétisés dans au moins un anneau magnétique tubulaire (13).

3. Moteur électrique selon la revendication 1 ou 2,
**caractérisé en ce que**
l'intervalle (25) entre l'épaulement radial (21) et la partie annulaire (20) se trouve au centre en dessous de l'étendue axiale de l'anneau magnétique (13).

4. Moteur électrique selon la revendication 3,
**caractérisé en ce que**
l'épaulement radial (21) du corps de support (18) est formé par une collerette (22) du corps de base (19) qui s'étend du centre au moins jusqu'à une face frontale de l'anneau magnétique (13).

5. Moteur électrique selon la revendication 4,
**caractérisé en ce que**
l'épaulement radial (21) coopérant avec la collerette (22) s'étend du centre au moins jusqu'à l'autre face frontale de l'anneau magnétique (13).

6. Moteur électrique selon la revendication 1,
**caractérisé en ce que**
les deux épaulements radiaux (21, 21a) sont formés par une collerette (22a) du corps de base (19a) qui est située au centre en dessous de l'étendue axiale de l'anneau magnétique (13).

7. Moteur électrique selon la revendication 1,
**caractérisé en ce que**
les deux épaulements radiaux (21, 21a) sont formés par une autre partie annulaire (33) du corps de support (18b), laquelle coulisse jusqu'au centre en dessous de l'étendue axiale de l'anneau magnétique (13) sur le corps de base (19b).

8. Moteur électrique selon la revendication 1 ou 2,
**caractérisé en ce que**
quatre parties annulaires tubulaires (34), ou plus, coulissent axialement sur le corps de base (19b) du corps de support (18c), dont les faces frontales situés l'une en face de l'autre forment trois intervalles (25) ou plus pour la réception de la colle, qui sont répartis axialement de façon régulière en dessous d'au moins un anneau magnétique (13).

9. Moteur électrique selon l'une des revendications précédentes,
**caractérisé en ce que**
la partie annulaire (20) ou les parties annulaires (30, 31, 33, 34) coulissent sur le corps de base (19, 19a, 19b) de façon à empêcher le pivotement.

10. Moteur électrique selon la revendication 9,
**caractérisé en ce que**
le corps de base (19, 19a, 19b) comporte un moletage ou une entaille longitudinale sur sa zone périphérique (29, 29a, 29b) portant la partie annulaire (20) ou les parties annulaires (30, 31, 33, 34).

11. Procédé de production d'un moteur électrique, notamment moteur sans balais, selon la revendication 1,
**caractérisé en ce qu'**
on applique la colle (24) nécessaire devant l'épaulement radial (21) sur le corps de base (19) du corps de support (18),
on pose au moins un anneau magnétique tubulaire (13) sur la périphérie du corps de support (18) de sorte qu'un espace annulaire (23) se forme entre celui-ci et le corps de support (18), et
ensuite on presse au moins une partie annulaire tubulaire (20) sur le corps de base (19) axialement contre l'épaulement radial (21) du corps de support (18) jusqu'à ce que la colle (24) soit exprimée de l'intervalle (25) axial formé entre l'épaulement radial (21) et la partie annulaire (20) pour pénétrer dans l'espace annulaire (23) où elle durcit.

12. Procédé selon la revendication 11,
**caractérisé en ce qu'**
on pousse tout d'abord axialement à partir d'une face frontale au moins une partie annulaire (20) du corps de support (18) sur le corps de base (19), jusqu'à ce qu'il reste entre cette partie annulaire (20) et l'épaulement radial (21) du corps de support (18) un intervalle (25) axial suffisamment large pour la réception de la colle nécessaire,
ensuite on introduit la colle (24) nécessaire sous forme d'un cordon dans l'intervalle (25),
on pose ensuite au moins un anneau magnétique tubulaire (13) sur la périphérie du corps de support (18) de sorte qu'un espace annulaire (23) se forme entre celui-ci et le corps de support (18), et
finalement on presse au moins une partie annulaire (20) axialement contre l'épaulement radial (21) du corps de support (18) jusqu'à ce que l'intervalle (25) soit fermé et la colle exprimée hors de l'intervalle (25) pour pénétrer dans l'espace annulaire (23).

13. Procédé selon la revendication 11 ou 12,
**caractérisé en ce que**
les pôles magnétiques (14) sont magnétisés dans au moins un anneau magnétique tubulaire (13) après avoir poussé celui-ci pour, former l'espace annulaire (23) depuis une face frontale sur la périphérie du corps de support (18).

14. Procédé selon la revendication 13,
**caractérisé en ce qu'**
on pousse axialement sur le corps de base (19a, 19b) plusieurs parties annulaires (30, 31, 33, 34) du corps de support (18a, 18b, 18c) de sorte qu'il reste entre elles et/ou une collerette (22a) du corps de base (19a) respectivement un intervalle (25) pour la réception de la colle (24) nécessaire et,
après l'introduction de la colle (24) dans les intervalles (25) et après le coulissement axial de l'anneau magnétique (13) sur le corps de support (18b, 18c), tous les intervalles (25) sont fermés simultanément et régulièrement par compression axiale des parties annulaires (30, 31, 33, 34) et, de ce fait, la colle (24) est comprimée dans l'espace annulaire (23).

15. Procédé selon la revendication 11,
**caractérisé en ce qu'**
au moins une partie annulaire (20), après la pose de l'anneau magnétique (13) sur le corps de support (18), est pressée axialement sur le corps de base (19), en une opération, à partir de la face frontale jusqu'à l'épaulement radial (21) du corps de support (18), de sorte que la colle est exprimée de l'intervalle (25a), qui se réduit constamment, entre l'épaulement radial (21) et la partie annulaire (20) pour pénétrer dans l'espace annulaire (23) restant.

16. Procédé selon la revendication 11,
**caractérisé en ce qu'**
on pousse tout d'abord au moins une partie annulaire tubulaire (20) sur le corps de base (19) axialement contre l'épaulement radial (21), jusqu'à ce qu'il reste entre la partie annulaire (20) et l'épaulement radial (21) un intervalle (25) axial suffisamment large pour la réception de la colle (24) nécessaire.
